(19) Europäisches Patentamt
European Patent Office
Office européen des brevets

(11) Veröffentlichungsnummer: **0 077 934**
**A2**

(12) # EUROPÄISCHE PATENTANMELDUNG

(21) Anmeldenummer: **82109129.5**

(22) Anmeldetag: **04.10.82**

(51) Int. Cl.³: **C 08 F 8/00**
H 01 B 1/12

(30) Priorität: **12.10.81 DE 3140448**

(43) Veröffentlichungstag der Anmeldung:
**04.05.83 Patentblatt 83/18**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(72) Erfinder: **Muench, Volker, Dr.**
**Luitpoldstrasse 114**
**D-6700 Ludwigshafen(DE)**

(72) Erfinder: **Penzien, Klaus, Dr.**
**Bensheimer Ring 18**
**D-6710 Frankenthal(DE)**

(72) Erfinder: **Naegele, Dieter, Dr.**
**Obere Jakobstrasse 8**
**D-6520 Worms(DE)**

(54) **Verfahren zur Herstellung von Poly(acetylen)filmen aus modifiziertem, elektrisch leitfähigem Poly(acetylen).**

(57) Die Erfindung betrifft ein Verfahren zur Herstellung von Poly(acetylen)filmen aus modifiziertem, elektrisch leitfähigem Poly(acetylen), wobei man ein Poly(acetylen)film (I) mit einer zur Addition an C=C-Doppelbindungen geeigneten organischen, anorganischen oder metallorganischen Verbindung umsetzt, welche entweder positiv polarisierte Halogenatome oder negativ polarisierte Wasserstoffatome im Molekül besitzt oder ein zur elektrophilen 1,4-dipolaren Addition fähiges Olefin ist, und (II) anschließend mit üblichen Komplexierungsmitteln versetzt.

Die Verbindung zur Umstetzung (I) kann sein:

ROX mit X = F, Cl, Br, I und R = H, $C_1$-$C_6$-(Perhalogeno)-Alkyl, (Perhalogeno)Aryl, $-SO_3^{\ominus}$, $-ClO_3$,

ROOX mit X = F, Cl und R = $-SF_5$, $-CF_3$, $-C_2F_5$,

RNHF mit R = $C_1$-$C_6$-(Perhalogeno)-Alkyl, $-SF_5$, $-C(O)OR^1$ [mit $R^1$ = $C_1$-$C_6$-(Perhalogeno)-Alkyl, (Perhalogeno)-Aryl],

$RNF_2$ mit R = H, $-NF_2$, $C_1$-$C_6$-(Perhalogeno)-Alkyl, (Perhalogeno)-Cycloalkyl, (Perhalogeno)-Aryl, $-SF_5$, $R^1-SO_2-$, $R^1-C(O)-$, $R^1OC(O)-$ [mit $R^1$ = $C_1$-$C_6$-(Perhalogeno)-Alkyl, (Perhalogeno)-Cycloalkyl, (Perhalogeno)-Aryl],

$R_2NF$ mit R = $C_1$-$C_6$-(Perhalogeno)Alkyl, (Perhalogeno)Cycloalkyl, (Perhalogeno)Aryl, $R^1-C(O)-$ [mit $R^1$ = $C_1$-$C_6$-(Perhalogeno)Alkyl, (Perhalogeno)Cycloalkyl, (Perhalogeno)Aryl], $-SF_5$, $-SO_2X$ [mit X = F, Cl],

$N_3F$, $NO_2F$, $NO_3F$ u.a.,

$NCl_3$, $NBr_3$, $NI_3 . x\ NH_3$ [mit x = 1-3],

R−NHX mit X = Cl, Br, I und R = H, $C_1$-$C_6$-Alkyl, Cyloalkyl, $R^1SO_2-$, $R^1C(O)-$, $R^1OC(O)-$ [mit $R^1$ = $C_1$-$C_6$-(Perhalogeno)Alkyl, (Perhalogeno)Cycloalkyl, (Perhalogeno)Aryl], $R^3R^2P(O)-$ [mit $R^3$, $R^2$ gleich und verschieden, mit $R^3$=$R^2$=$C_1$-$C_6$-Alkyl, Cycloalkyl, Aryl, Alkoxi, Aryloxi].

./...

EP 0 077 934 A2

$R-NX_2$ mit X = Cl, Br, I und R gleich den oben genannten Gruppen und zusätzlich R = $-SF_5$, $-SO_2F$, $-SO_2Cl$,

$R_2NX$ mit X = Cl, Br, I und R gleich den oben genannten Gruppen und zusätzlich $-SF_5$, $-SO_2F$, $-SO_2Cl$, $(CH_3)_3Si-$, -Succinidyl,

NOCl, NOBr, NOI, $N_3Br$, $N_3I$,

ClF, $Cl_2$, $Br_2$, BrCl, $BrCl_3$, $BrF_3$, $ICl_3$, $F_2$,

$N_2O_4$, $N_2O_5$,

$HMR^1R^2$ mit $R^1$, $R^2$ gleich oder verschieden und $R^1$=$R^2$ = H, $C_1$-$C_8$-Alkyl, Cycloalkyl, Aryl, Alkoxi, Aryloxi und M = B, Al, Ga, P, As, Sb, Bi,

$HP(O)R^1R^2$ mit $R^1$, $R^2$ gleich oder verschieden und $R^1$=$R^2$ = H, OH, $C_1$-$C_8$-Alkyl, Cycloalkyl, Aryl, Alkoxi, Aryloxi,

Bis(cyclopentadienyl)MRH mit R = H, $C_1$-$C_8$-Alkyl, Cl, Br und M = Ti, Zr, Hf;

$Q^1Q^2C{=}CQ^1Q^2$ mit $Q^1$, $Q^2$ gleich oder verschieden und $Q^1$ = $Q^2$ = H, F, Cl, $-CN$, $-COOR$ [mit R = H, $C_1$-$C_8$-Perhalogenoalkyl, Perhalogenocycloalkyl, Perhalogenoaryl] oder cyclisch verknüpftem $Q^1$-$Q^2$ = $-C(O)-O-C(O)-$.

Das zur Umsetzung (II) eingesetzte Komplexierungsmittel kann sein: eine oxidierende Lewissäure, wie z.B. $AsF_5$, $SbF_5$, $SbCl_5$, $VF_5$, $XeF_6$ oder eine nicht oxidierende Lewissäure plus ein Oxidationsmittel, wie z.B. $PF_5$ + NOF, $AlCl_3$ + $Cl_2$ oder eine oxidierende Protonensäure, wie z.B. $HClO_4$, $H_2SO_4$ oder $HNO_3$ oder eine nicht oxidierende Säure, welche durch anodische Oxidation eingelagert wird, wie z.B. $H_3PO_4$, $CF_3SO_3H$ oder ein Salz, welches durch anodische Oxidation eingelagert wird, wie z.B. $NaPF_6$, $NaBF_4$ oder ein stark elektropositives Metall, wie z.B. Li, Na, K, Rb, Cs, Mg, Ca, Sr, Ba, Lanthanid oder ein tertiäres Ammoniumion, welches durch kathodische Reduktion eingelagert wird.

# Verfahren zur Herstellung von Poly(acetylen)filmen aus modifiziertem, elektrisch leitfähigem Poly(acetylen)

Die Erfindung betrifft ein Verfahren zur Herstellung von Poly(acetylen)filmen aus modifiziertem, elektrisch leitfähigem Poly(acetylen).

Bei derartigen Verfahren werden Polymerfilme erhalten, die elektrisch leitfähig sind.

Es ist bekannt, daß durch Komplexierung mit beispielsweise $AsF_5$, $SbF_5$, Na oder Li elektrisch hochleitfähig gemachtes filmförmiges Poly(acetylen) leicht versprödet und brüchig wird (vgl. A.G. McDiarmid und A.J. Heeger, Synthetic Metals, Bd 1, Seite 101 (1980)). Dadurch werden (z.B.) die Haftfähigkeit auf Metall- oder Glasoberflächen, die Reißfestigkeit, die Biegefestigkeit, die Selbsttragefähigkeit, die Verarbeitbarkeit und somit generell die Verwendung in der Elektrotechnik drastisch eingeschränkt.

Es ist weiterhin bekannt, daß Verbindungen mit positiv polarisierten Halogenatomen (vgl. M.M. Campbell et al, Chemical Reviews, Vol. 78, Seite 65-79 (1978); J. Lessard et al, Canadian Journal of Chemistry, 59, Seite 431-450; F. Minisci, Synthesis, Vol. 1, Seite 1-24 (1973); J. Jander et al, Nitrogen Compounds of Chlorine, Bromine and Iodine, in Developments in Inorganic Nitrogen Chemistry, Vol. 2, Elsevier, 1973, Seite 70-203; M. Lustig und J.M. Shreeve, Advances in Fluorine Chemistry, Vol. 7, Seite 175-198, 1973) und Verbindungen mit negativ polarisierten Wasserstoffatomen (vgl. J. Schwartz und D.W. Hart, Journal of American Chemical Society, Vol. 96, Seite 8115 (1974); D.W. Hart, T.F. Blackburn und J. Schwartz, ibid., Vol. 97, Seite 679 (1975); J.D. Roberts and M.C. Caserio,

Rss/P

Basic Principles of Organic Chemistry, W.A. Benjamin Inc. 1977, Seite 422-426; M.M. Rauhut et al, Journal of Organic Chemistry, Vol. 26, Seite 5138 (1961); M.M. Rauhut et al, Journal of Organic Chemistry, Vol. 26, Seite 4628 (1961); Houben-Weyl, Methoden der Organischen Chemie, G. Thieme Verlag, 1963, Phosphor, Bd. 1, S. 228) sowie elektronenarme Olefine im Sinne einer 1,4-dipolaren Addition nach Diels und Alder (vgl. J.D. Roberts und M.C. Caserio, Basic Principles of Organic Chemistry, W.A. Benjamin Inc., 1977, Seite 492-504) besonders gut zur Addition am Doppelbindungssystem geeignet sind.

Der Erfindung lag die Aufgabe zugrunde, komplexierte, hochleitfähige Poly(acetylene) zu schaffen, deren mechanische und elektrische Eigenschaften verbessert sind.

Diese Aufgabe wurde dadurch gelöst, daß man einen Poly(acetylenen)film (I) mit einer zur Addition an C=C-Doppelbindungen geeigneten organischen, anorganischen oder metallorganischen Verbindung umsetzt, welche entweder positiv polarisierte Halogenatome oder negativ polarisierte Wasserstoffatome im Molekül besitzt oder ein zur elektrophilen 1,4-dipolaren Addition fähiges Olefin ist, und (II) anschließend mit üblichen Komplexierungsmitteln versetzt.

Bevorzugte Verfahren zeichnen sich dadurch aus, daß man die Verbindung zur Umsetzung (I) als Gas, welches man gegebenenfalls mit Inertgas verdünnt, einsetzt; daß man die Verbindung zur Umsetzung (I) in Gegenwart eines inerten Lösungsmittels bei -120 bis +150°C einsetzt; daß die Verbindung zur Umsetzung (I), welche ein positiv polarisiertes Halogenatom enthält, sein kann:

a) ROX mit X = F, Cl, Br, I und R = H, $C_1$-$C_6$-(Perhalogeno)Alkyl, (Perhalogeno)Aryl, $-SO_3^{\ominus}$, $-ClO_3$,

b) ROOX mit X = F, Cl und R = $-SF_5$, $-CF_3$, $-C_2F_5$,

c) RNHF mit R = $C_1$-$C_6$-(Perhalogeno)Alkyl, $-SF_5$, $-C(O)OR^1$ [mit $R^1$ = $C_1$-$C_6$-(Perhalogeno)Alkyl, (Perhalogeno)Aryl],

d) $RNF_2$ mit R = H, $-NF_2$, $C_1$-$C_6$-(Perhalogeno)Alkyl, (Perhalogeno)Cycloalkyl, (Perhalogeno)Aryl, $-SF_5$, $R^1$-$SO_2$-, $R^1$-C(O)-, $R^1$OC(O)- [mit $R^1$ = $C_1$-$C_6$-(Perhalogeno)Alkyl, (Perhalogeno)Cycloalkyl, (Perhalogeno)Aryl],

e) $R_2NF$ mit R = $C_1$-$C_6$-(Perhalogeno)Alkyl, (Perhalogeno)Cycloalkyl, (Perhalogeno)Aryl, $R^1$-C(O)- [mit $R^1$ = $C_1$-$C_6$-(Perhalogeno)Alkyl, (Perhalogeno)Cycloalkyl, (Perhalogeno)Aryl], $-SF_5$, $-SO_2X$ [mit X = F, Cl],

f) $N_3F$, $NO_2F$, $NO_3F$ u.a.,

g) $NCl_3$, $NBr_3$, $NI_3 \cdot x\ NH_3$ [mit x = 1-3],

h) R-NHX mit X = Cl, Br, I und R = H, $C_1$-$C_6$-Alkyl, Cycloalkyl, $R^1SO_2$-, $R^1$C(O)-, $R^1$OC(O)- [mit $R^1$ = $C_1$-$C_6$-(Perhalogeno)Alkyl, (Perhalogeno)Cycloalkyl, (Perhalogeno)Aryl], $R^3R^2$P(O)- [mit $R^3$, $R^2$ gleich und verschieden, mit $R^3$=$R^2$=$C_1$-$C_6$-Alkyl, Cycloalkyl, Aryl, Alkoxi, Aryloxi],

i) $R-NX_2$ mit X = Cl, Br, I und R gleich den unter h) genannten Gruppen und zusätzlich R = $-SF_5$, $-SO_2F$, $-SO_2Cl$,

j) $R_2NX$ mit X = Cl, Br, I und R gleich den unter h) genannten Gruppen und zusätzlich $-SF_5$, $-SO_2F$, $-SO_2Cl$, $(CH_3)_3Si-$, -Succinidyl,

k) NOCl, NOBr, NOI, $N_3Br$, $N_3I$,

l) ClF, $Cl_2$, $Br_2$, BrCl, $BrCl_3$, $BrF_3$, $ICl_3$, $F_2$,

m) $N_2O_4$, $N_2O_5$;

daß die Verbindung zur Umsetzung (I), welche negativ polarisierte Wasserstoffatome im Molekül besitzen, sein kann:

a) $HMR^1R^2$ mit $R^1$, $R^2$ gleich oder verschieden und $R^1=R^2$ = H, $C_1$-$C_6$-Alkyl, Cycloalkyl, Aryl, Alkoxi, Aryloxi und M = B, Al, Ga, P, As, Sb, Bi,

b) $HP(O)R^1R^2$ mit $R^1$, $R^2$ gleich oder verschieden und $R^1=R^2$ = H, OH, $C_1$-$C_6$-Alkyl, Cycloalkyl, Aryl, Alkoxi, Aryloxi,

c) Bis(cyclopentadienyl)MRH mit R = H, $C_1$-$C_6$-Alkyl, Cl, Br und M = Ti, Zr, Hf;

daß die Verbindung zur Umsetzung (I), welche ein zur elektrophilen Addition fähiges Olefin ist, sein kann:

$Q^1Q^2C=CQ^1Q^2$ mit $Q^1$, $Q^2$ gleich oder verschieden und $Q^1 = Q^2$ = H, F, Cl, -CN, -COOR [mit R = H, $C_1$-$C_6$-Perhalogenoalkyl, Perhalogenocycloalkyl, Perhalogenoaryl] oder cyclisch verknüpftem $Q^1$-$Q^2$ = -C(O)-O-C(O)-, und

daß das zur Umsetzung (I) eingesetzte Komplexierungsmittel sein kann: eine oxidierende Lewissäure, wie z.B. $AsF_5$, $SbF_5$, $SbCl_5$, $VF_5$, $XeF_6$; oder eine nicht oxidierende Lewissäure plus ein Oxidationsmittel, wie z.B. $PF_5$+NOF, $AlCl_3$+$Cl_2$; oder eine oxidierende Protonsäure, wie z.B. $HClO_4$, $H_2SO_4$ oder $HNO_3$; oder eine nicht oxidierende Säure, welche durch anodische Oxidation eingelagert wird, wie z.B. $H_3PO_4$, $CF_3SO_3H$; oder ein Salz, welches durch anodische Oxidation eingelagert wird, wie z.B. $NaPF_6$, $NaBF_4$; oder ein stark elektropositives Metall, wie z.B. Li, Na, K, Rb, Cs, Mg, Ca, Sr, Ba, Lanthanid oder ein tertiäres Ammoniumion, welches durch kathodische Reduktion eingelagert wird.

Unter filmförmigem Poly(acetylen) werden 10 bis 150 µm, bevorzugt 20 bis 100 µm, dünne Filme verstanden.

Die Polymerisation von Acetylen selbst ist nicht Gegenstand der vorliegenden Erfindung. Sie ist in der DE-OS 31 20 441 und in der DE-OS 31 00 581 beschrieben. Als Di- und/oder Poly(alkine), welche gegebenenfalls zusammen mit dem Acetylen zu Copolymerisaten umgesetzt werden, kommen hierbei insbesondere in Frage: Butadiin, Hexadiin, Octadiin u.a. Man verwendet zweckmäßig Monomermischungen, die bis zu 50 Mol-% Di- oder Poly(alkine), vorzugsweise zwischen 5 und 20 Mol-% Alkine, enthalten. Als Übergangsmetallkatalysatoren kommen insbesondere die in der DE-OS 29 12 572 angeführten Verbindungen in Betracht. Besonders geeignet ist ein Zieglerkontakt aus $Al(C_2H_5)_3$ und $Ti(OC_4H_9)_4$. Das Mischungsverhältnis aus Aluminiumtrialkyl und Titantetraoxialkyl liegt zwischen 0,5 : 1 und 1 : 0,5, vorzugsweise um 1 : 1, jeweils bezogen auf Gewichtsteile.

Die erfindungsgemäß zu verwendenden Reagentien sind entweder Verbindungen mit positiv polarisiertem Halogen:

a) ROX mit X = F, Cl, Br, I und R = H, $C_1$-$C_6$-(Perhalogeno)Alkyl, (Perhalogeno)Aryl, $-SO_3^{\ominus}$, $-ClO_3$, <u>Beispiele</u>: HOF, HOCl, HOBr, HOI, $CF_3OF$, $C_2F_5OF$, $FSO_4^{\ominus}$, $FOClO_3$ u.a.

b) ROOX mit X = F, Cl und R = $-SF_5$, $-CF_3$, $-C_2F_5$, <u>Beispiele</u>: $SF_5OOF$, $SF_5OOCl$, $CF_3OOF$ u.a.

c) RNHF mit R = $C_1$-$C_6$-(Perhalogeno)Alkyl, $-SF_5$, $-C(O)OR^1$ [mit $R^1$ = $C_1$-$C_6$-(Perhalogeno)Alkyl, (Perhalogeno)Aryl] <u>Beispiele</u>: $C_3H_7$-NHF, $SF_5NHF$, $C_2H_5OC(O)NHF$, i-$C_3H_7OC(O)NHF$, $CCl_3OC(O)NHF$ u.a.

d) $RNF_2$ mit R = H, $-NF_2$, $C_1$-$C_6$-(Perhalogeno)Alkyl, (Perhalogeno)Cycloalkyl, (Perhalogeno)Aryl, $R^1$-$SO_2$- [mit $R^1$ = $C_1$-$C_6$-(Perhalogeno)Alkyl, (Perhalogeno)Cycloalkyl, (Perhalogeno)Aryl], $R^1$-C(O)- [mit $R^1$ = $C_1$-$C_6$-(Perhalogeno)Alkyl, (Perhalogeno)Cycloalkyl, (Perhalogeno)Aryl], $-SF_5$, $R^1OC(O)$- [$R^1$ siehe oben] <u>Beispiele</u>: $HNF_2$, $N_2F_4$, $C_2H_5NF_2$, $C_3H_7NF_2$, $C_3F_7NF_2$, 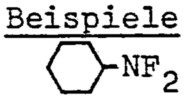$-NF_2$, 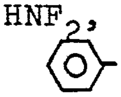$-SO_2NF_2$, $CF_3SO_2NF_2$, $CCl_3SO_2NF_2$, $C_2H_5C(O)NF_2$, $CCl_3C(O)NF_2$, $C_2H_5OC(O)NF_2$, i-$C_3H_7OC(O)NF_2$, $SF_5NF_2$ u.a.

e) $R_2NF$ mit R = $C_1$-$C_6$-(Perhalogeno)Alkyl, (Perhalogeno)Cycloalkyl, (Perhalogeno)Aryl, $R^1C(O)$- [mit $R^1$ s.o.], $-SF_5$, $-SO_2$ X [mit X = F, Cl]. <u>Beispiele</u>: $(CH_3)_2NF$, $(C_6F_{11})_2NF$, 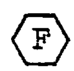 $_2NF$, $CH_3$-C(O)-NF-C(O)$CH_3$, $(SF_5)_2NF$, $(FSO_2)_2NF$, u.a.

f) $N_3F$, $NO_2F$, $NO_3F$ u.a.

g) $NCl_3$, $NBr_3$, $NI_3 \cdot x\ NH_3$ [mit x = 1 - 3]

h) R-NHX mit X = Cl, Br, I und R = H, $C_1$-$C_6$-Alkyl, Cycloalkyl, $R^1SO_2$- [mit $R^1$ = $C_1$-$C_6$-(Perhalogeno)Alkyl, (Perhalogeno)Cycloalkyl, (Perhalogeno)Aryl], $R^1C(O)$- [mit $R^1$ s.o.], $R^3R^2P(O)$- [mit $R^3$, $R^2$ gleich und verschieden, mit $R^3$ = $R^2$ =$C_1$-$C_6$-Alkyl, Cycloalkyl, Aryl, Alkoxi, Aryloxi], $R^1OC(O)$- [mit $R^1$ s.o.]
<u>Beispiele</u>: $NH_2Cl$, $NH_2Br$, $CH_3NHCl$, $CH_3NHBr$, $C_2H_5NHBr$, 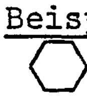-NHBr, $CF_3SO_2NHCl$, $CH_3$-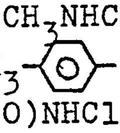-$SO_2NHCl$, $(C_6H_5O)_2P(O)NHCl$, $CCl_3OC(O)NHCl$, $C_2H_5OC(O)NHBr$,

i) $R$-$NX_2$ mit X = Cl, Br, I und R gleich den unter h) genannten Gruppen und zusätzlich R = $-SF_5$, $SO_2F$, $SO_2Cl$,
<u>Beispiele</u>: $CH_3NCl_2$, $C_6H_{11}NBr_2$, $C_6H_5C(O)NBr_2$, $C_6H_5C(O)NI_2$, $C_3H_7C(O)NI_2$, $SF_5NCl_2$, $FSO_2NCl_2$,

j) $R_2NX$ mit X = Cl, Br, I und R gleich den unter h) genannten Gruppen und zusätzlich $-SF_5$, $-SO_2F$, $-SO_2Cl$, $(CH_3)_3Si$, -Succinidyl-
<u>Beispiele</u>: $(CH_3)_2NCl$, $[(CH_3)_3Si]_2NCl$, $[(CH_3)_3Si]_2NBr$, $[(CH_3)_3Si]_2NI$, $(SF_5)_2NCl$, $(FSO_2)_2NCl$, $(FSO_2)_2NBr$, $(C_2H_5)_2NBr$,

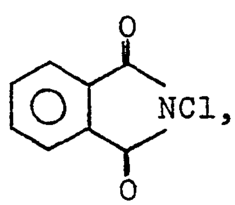, 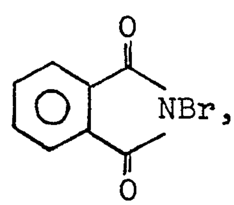, 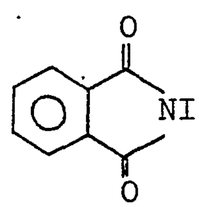

k) NOCl, NOBr, NOI, $N_3Cl$, $N_3Br$, $N_3I$,

l) ClF, $Cl_2$, $Br_2$, BrCl, $BrCl_3$, $BrF_3$, BrI, $ICl_3$, $F_2$,

m) $N_2O_4$, $N_2O_5$

oder Verbindungen mit negativ polarisiertem Wasserstoff:

a) $HMR^1R^2$ mit $R^1$, $R^2$ gleich oder verschieden und $R^1 = R^2$ = H, $C_1$-$C_6$-Alkyl, Cycloalkyl, Aryl, Alkoxi, Aryloxi und M = B, Al, Ga, P, As, Sb, Bi
<u>Beispiele</u>: $BH_3$, $AlH_3$, $PH_3$, $AsH_3$, $SbH_3$, $BH(C_2H_5)_2$, $PH(C_3H_7)_2$, $BH_2C_4H_9$, $AsH(C_6H_5)_2$, $PH(OC_6H_5)_2$, $SbH(C_2H_5)_2$, $BH(OCH_3)_2$, $H_2PCH_3$,

b) $HP(O)R^1R^2$ mit $R^1$, $R^2$ gleich oder verschieden und $R^1 = R^2$ = H, OH, $C_1$-$C_6$-Alkyl, Cycloalkyl, Aryl, Alkoxi, Aryloxi
<u>Beispiele</u>: $H_3PO_2$, $H_3PO_3$, $HP(O)(C_2H_5)_2$, $HP(O)(C_6H_5)_2$, $HP(O)(C_6H_5)(CH_3)$, $H_2P(O)C_6H_5$, $H_2P(O)CH_3$, $HP(O)(OCH_3)_2$, $HP(O)(OC_6H_5)_2$, $H_2P(O)(OC_4H_9)$,

c) Bis(cyclopentadienyl) MRH mit R = H, $C_1$-$C_6$-Alkyl, Cl, Br und M = Ti, Zr, Hf
<u>Beispiele</u>: $Cp_2ZrClH$, $Cp_2ZrBrH$, $Cp_2ZrCH_3H$

oder Verbindungen, welche zur elektrophilen 1,4-dipolaren Addition befähigt sind:

$Q^1Q^2C = CQ^1Q^2$ mit $Q^1$, $Q^2$ gleich oder verschieden und $Q^1 = Q^2$ = H, F, Cl, -CN, -COOR [mit R = H, $C_1$-$C_6$-Perhalogenoalkyl, Perhalogenocycloalkyl, Perhalogenoaryl] oder cyclisch verknüpftem $Q^1$-$Q^2$ = -C(O)-O-C(O).
<u>Beispiele</u>: $(CN)_2C=C(CN)_2$, $F_2C=CF_2$, $Cl_2C=CCl_2$, $Cl_2C=CClF$,
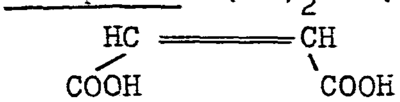
,
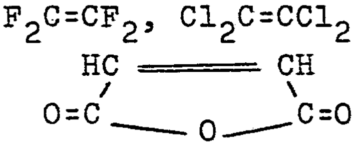
$CF_3HC=CHCF_3$, $CCl_3HC=CHCCl_3$, $C_6F_5HC=CHC_6F_5$.

Ein Poly(acetylen)film [1 g ≙ 76,9 mmol $(CH)_x$] wird in 4 gleichgroße Stücke geteilt und wie folgt behandelt:

Beispiel 1

19 mmol $(CH)_x$ wurden mit 0,5 mmol $NO_2F$ in der Gasphase 10 min lang behandelt. Dabei wurden ca. 0,3 mmol $NO_2F$ umgesetzt. Der modifizierte Film wurde in üblicher Weise mit $AsF_5$ umgesetzt. Man erhielt einen Film der Zusammensetzung $[(CH)(NO_2F)_{0,015} \cdot (AsF_5)_{0,16}]_x$, $\sigma$= 780 s/cm.

Beispiel 2

19,5 mmol $(CH)_x$ wurden mit 0,5 mmol Diboran in THF 10 min lang behandelt. Dabei entstand ein Material der Zusammensetzung $[(CH_{1,1})(BH_2)_{0,01}]$. Dies wurde in üblicher Weise mit Natriumnaphthalid in THF komplexiert. Man erhielt einen Film der Zusammensetzung $[Na_{0,1}(CH_{1,1})(BH_2)_{0,01}]_x$, $\sigma$= 150 s/cm.

Vergleichsbeispiel 1

Ein unbehandeltes Filmstück (19 mmol) wurde mit $AsF_5$ komplexiert. Man erhielt $[(CH)(AsF_5)_{0,18}]_x$, $\sigma$= 180 s/cm.

Vergleichsbeispiel 2

Ein unbehandeltes Filmstück (19 mmol) wurde mit Natriumnaphthalid komplexiert. Man erhielt $[Na_{0,14}(CH)]_x$, $\sigma$= 10 s/cm.

Patentansprüche

1. Verfahren zur Herstellung von Poly(acetylen)filmen aus modifiziertem, elektrisch leitfähigem Poly(acetylen), dadurch gekennzeichnet, daß man einen Poly(acetylen)-film
(I) mit einer zur Addition an C=C-Doppelbindungen geeigneten organischen, anorganischen oder metallorganischen Verbindung umsetzt, welche entweder positiv polarisierte Halogenatome oder negativ polarisierte Wasserstoffatome im Molekül besitzt oder ein zur elektrophilen 1,4-dipolaren Addition fähiges Olefin ist, und
(II) anschließend mit üblichen Komplexierungsmitteln versetzt.

2. Verfahren nach Anspruch 1, dadurch gekennzeichnet, daß man die Verbindung zur Umsetzung (I) als Gas, welches man gegebenenfalls mit Inertgas verdünnt, einsetzt.

3. Verfahren nach Anspruch 1, dadurch gekennzeichnet, daß man die Verbindung zur Umsetzung (I) in Gegenwart eines inerten Lösungsmittels bei -120°C bis +150°C einsetzt.

4. Verfahren nach Anspruch 1, dadurch gekennzeichnet, daß die Verbindung zur Umsetzung (I), welche ein positiv polarisiertes Halogenatom enthält, sein kann:

a) ROX mit X = F, Cl, Br, I und R = H, $C_1$-$C_6$-(Perhalogeno)-Alkyl, (Perhalogeno)Aryl, $-SO_3^{\ominus}$, $-ClO_3$,

b) ROOX mit X = F, Cl und R = $-SF_5$, $-CF_3$, $-C_2F_5$,

c) RNHF mit R = $C_1$-$C_6$-(Perhalogeno)-Alkyl, $-SF_5$, $-C(O)OR^1$ [mit $R^1$ = $C_1$-$C_6$-(Perhalogeno)-Alkyl, (Perhalogeno)-Aryl],

d) $RNF_2$ mit R = H, $-NF_2$, $C_1$-$C_6$-(Perhalogeno)-Alkyl, (Perhalogeno)-Cycloalkyl, (Perhalogeno)-Aryl, $-SF_5$, $R^1$-$SO_2$-, $R^1$-C(O)-, $R^1$OC(O)- [mit $R^1$ = $C_1$-$C_6$-(Perhalogeno)-Alkyl, (Perhalogeno)-Cycloalkyl, (Perhalogeno)-Aryl],

e) $R_2NF$ mit R = $C_1$-$C_6$-(Perhalogeno)Alkyl, (Perhalogeno)Cycloalkyl, (Perhalogeno)Aryl, $R^1$-C(O)- [mit $R^1$ = $C_1$-$C_6$-(Perhalogeno)Alkyl, (Perhalogeno)Cycloalkyl, (Perhalogeno)Aryl], $-SF_5$, $-SO_2X$ [mit X = F, Cl],

f) $N_3F$, $NO_2F$, $NO_3F$ u.a.,

g) $NCl_3$, $NBr_3$, $NI_3 \cdot x\ NH_3$ [mit x = 1-3],

h) R-NHX mit X = Cl, Br, I und R = H, $C_1$-$C_6$-Alkyl, Cycloalkyl, $R^1SO_2$-, $R^1$C(O)-, $R^1$OC(O)- [mit $R^1$ = $C_1$-$C_6$-(Perhalogeno)Alkyl, (Perhalogeno)Cycloalkyl, (Perhalogeno)Aryl], $R^3R^2$P(O)- [mit $R^3$, $R^2$ gleich und verschieden, mit $R^3$=$R^2$=$C_1$-$C_6$-Alkyl, Cycloalkyl, Aryl, Alkoxi, Aryloxi],

i) $R-NX_2$ mit X = Cl, Br, I und R gleich den unter h) genannten Gruppen und zusätzlich R = $-SF_5$, $-SO_2F$, $-SO_2Cl$,

j) $R_2NX$ mit X = Cl, Br, I und R gleich den unter h) genannten Gruppen und zusätzlich $-SF_5$, $-SO_2F$, $-SO_2Cl$, $(CH_3)_3Si-$, -Succinidyl,

k) NOCl, NOBr, NOI, $N_3Br$, $N_3I$,

l) ClF, $Cl_2$, $Br_2$, BrCl, $BrCl_3$, $BrF_3$, $ICl_3$, $F_2$,

m) $N_2O_4$, $N_2O_5$.

5. Verfahren nach Anspruch 1, dadurch gekennzeichnet, daß die Verbindung zur Umsetzung (I), welche negativ polarisierte Wasserstoffatome im Molekül besitzen, sein kann:

a) $HMR^1R^2$ mit $R^1$, $R^2$ gleich oder verschieden und $R^1=R^2$ = H, $C_1$-$C_6$-Alkyl, Cycloalkyl, Aryl, Alkoxi, Aryloxi und M = B, Al, Ga, P, As, Sb, Bi,

b) $HP(O)R^1R^2$ mit $R^1$, $R^2$ gleich oder verschieden und $R^1=R^2$ = H, OH, $C_1$-$C_6$-Alkyl, Cycloalkyl, Aryl, Alkoxi, Aryloxi,

c) Bis(cyclopentadienyl)MRH mit R = H, $C_1$-$C_6$-Alkyl, Cl, Br und M = Ti, Zr, Hf.

6. Verfahren nach Anspruch 1, dadurch gekennzeichnet, daß die Verbindung zur Umsetzung (I), welche ein zur elektrophilen Addition fähiges Olefin ist, sein kann:

$Q^1Q^2C=CQ^1Q^2$ mit $Q^1$, $Q^2$ gleich oder verschieden und $Q^1 = Q^2$ = H, F, Cl, -CN, -COOR [mit R = H, $C_1$-$C_6$-Perhalogenoalkyl, Perhalogenocycloalkyl, Perhalogenoaryl] oder cyclisch verknüpftem $Q^1$-$Q^2$ = -C(O)-O-C(O)-.

7. Verfahren nach Anspruch 1, dadurch gekennzeichnet, daß das zur Umsetzung (II) eingesetzte Komplexierungsmittel sein kann: eine oxidierende Lewissäure, wie z.B. $AsF_5$, $SbF_5$, $SbCl_5$, $VF_5$, $XeF_6$; oder eine nicht oxidierende Lewissäure plus ein Oxidationsmittel, wie z.B. $PF_5$+NOF, $AlCl_3$+$Cl_2$; oder eine oxidierende Protonsäure, wie z.B. $HClO_4$, $H_2SO_4$ oder $HNO_3$; oder eine nicht oxidierende Säure, welche durch anodische Oxidation eingelagert wird, wie z.B. $H_3PO_4$, $CF_3SO_3H$; oder ein Salz, welches durch anodische Oxidation eingelagert wird, wie z.B. $NaPF_6$, $NaBF_4$; oder ein stark elektropositives Metall, wie z.B. Li, Na, K, Rb, Cs, Mg, Ca, Sr, Ba, Lanthanid oder ein tertiäres Ammoniumion, welches durch kathodische Reduktion eingelagert wird.